# EUROPEAN PATENT SPECIFICATION

(11) **EP 2 548 100 B1**
(45) Date of publication and mention of the grant of the patent: **15.05.2019**
(21) Application number: 11711675.6
(22) Date of filing: 08.03.2011
(51) Int. Cl.: G06F 3/01

(54) **A METHOD AND SYSTEM FOR CONTROLLING AT LEAST ONE DEVICE**
VERFAHREN UND SYSTEM ZUR STEUERUNG MINDESTENS EINER VORRICHTUNG
PROCÉDÉ ET SYSTÈME PERMETTANT DE CONTRÔLER AU MOINS UN DISPOSITIF

(30) Priority: 15.03.2010 EP 10156453
(43) Date of publication of application: 23.01.2013
(73) Proprietor: Koninklijke Philips N.V., 5656 AE Eindhoven (NL)
(72) Inventor: ALIAKSEYEU, Dzmitry, Viktorovich, NL-5656 AE Eindhoven (NL); DU, Jia, NL-5656 AE Eindhoven (NL); ZWARTKRUIS-PELGRIM, Petronella, Hendrika, NL-5656 AE Eindhoven (NL)
(74) Representative: Kroeze, Johannes Antonius
(86) International application number: PCT/IB2011/050962
(87) International publication number: WO 2011/114257

(56) References cited:
- EP-A2- 1 223 537
- WO-A1-2004/042544
- US-A1- 2004 242 988
- US-A1- 2009 187 114

## Description

### FIELD OF THE INVENTION

The present invention relates to a method and system for controlling at least one device. In particular, it relates to controlling a device remotely.

### BACKGROUND OF THE INVENTION

Operation of different home appliances including home entertainment systems are, invariably, controlled by a remote control device which is in the form of a hand held device comprising a plurality of push buttons to control various functions of the controlled device. Alternative remote control devices may utilise touch-sensitive screens or speech recognition. However, such device can be difficult to use, particularly if the user is physically disabled, having difficulty holding the device and/or difficulty pushing buttons etc or may be visually impaired making using the device difficult. Furthermore some of these remote control devices require teaching making set up difficult and time consuming. Furthermore, remote control devices are generally small and easily misplaced.

There is therefore a desire to enable to control of various functions of such devices within the limitations of the capabilities of the user, for example may have mild to severe disabilities. This may include a user who is bed-ridden.

Furthermore, in the case of the bedroom environment, users often need to wind down before they can go to sleep. Therefore, the activities that users engage in before going to sleep typically require little mental and physical effort, to avoid the user becoming too alert. The same applies when people wake up during the night. In addition, users do not want to disturb a sleeping partner. This means that users, even if not restricted by disability, are restricted in the freedom to engage in certain activities and also in the freedom to interact with any digital appliances that they might have in their bedroom. Typical examples of bedroom appliances are TVs, music players, alarm clocks, etc. The interaction with these conventional devices is usually not suited for the bedroom environment.

US2004/242988 discloses an operation recognition system that comprises:
an object to be operated; at least one camera configured to acquire image data of an operator, at least a predetermined number of image data being acquired in a predetermined time period;
a processor configured to perform recognition processing on the acquired image data, so as to define a first virtual plane in between the object and the operator, and to determine if a predetermined part of the operator penetrates the first virtual plane; and a controller configured to control the object based on the determination. A processing unit determines the arm length of an operator based on the acquired image data, the view point, and the calculated distances. The processing unit then determines a position in a distance L of a half length of the operators arm from the view point. The virtual plane G is defined at the position in the distance L from the view point.

US 2009/0177327 relates to a bed that includes sensors for detecting small deflections caused by the respiration, pulse, motion and presence of a user. The bed also includes a computing unit that controls electronic appliances based on the deflections. For example, if the sensors detect the user leaving the bed, the computing device adjusts the lighting to illuminate a path for the user. However, it is not possible for the user of this system to control specific functions of the appliances without leaving the bed or without using a remote control. The user therefore does not have complete control over the appliances. Furthermore, this system is prone to false activation.

There is therefore a need for a method that allows a user to control specific functions of appliances without leaving the bed or couch and with minimal effort. The method is required to reduce the mental and physical effort needed to control appliances, reduce the effort needed to initiate the interaction and, in the case of people with disabilities, allow the user to control appliances without help and with minimum effort, and to minimize the number of errors.

### SUMMARY OF THE INVENTION

The invention seeks to provide a method and system that allows a user to control specific functions of devices from their current position, with minimal mental and physical effort and with minimum errors.

The invention is defined by the independent claims. Further aspects of the invention are outlined in the dependent claims. Embodiments which do not fall within the scope of the claims do not describe part of the present invention.

### BRIEF DESCRIPTION OF THE DRAWINGS

For a better understanding of the invention, and to show more clearly how it may be carried into effect, reference will now be made, by way of example only, to the accompanying drawings in which:
Figure 1 is a simplified schematic of a system for controlling at least one device;
Figure 2 is a flowchart of a method for controlling at least one device; and
Figure 3 is a diagram schematically illustrating interaction zones in an embodiment of a system for controlling at least one device.

### DETAILED DESCRIPTION

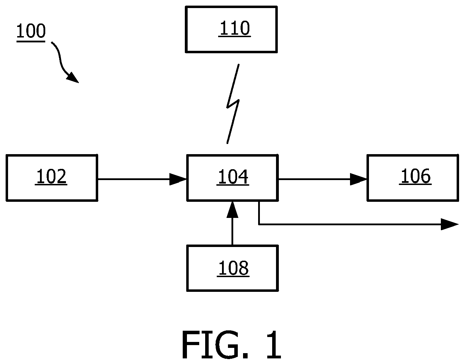

With reference to Figure 1, the system 100 comprises a detector 102. The output of the detector 102 is connected to a processor 104. The output of the processor 104 is connected to a rendering device 106. The system 100 comprises a sensor 108. The output of the sensor 108 is also connected to the processor 104. These connections may be wired or wireless. The system 100 further comprises a remote control device 110 for wireless communicating with the processor 104. The remote control device 110 may comprise a push button device, a touch-sensitive screen device or a speech recognition device.

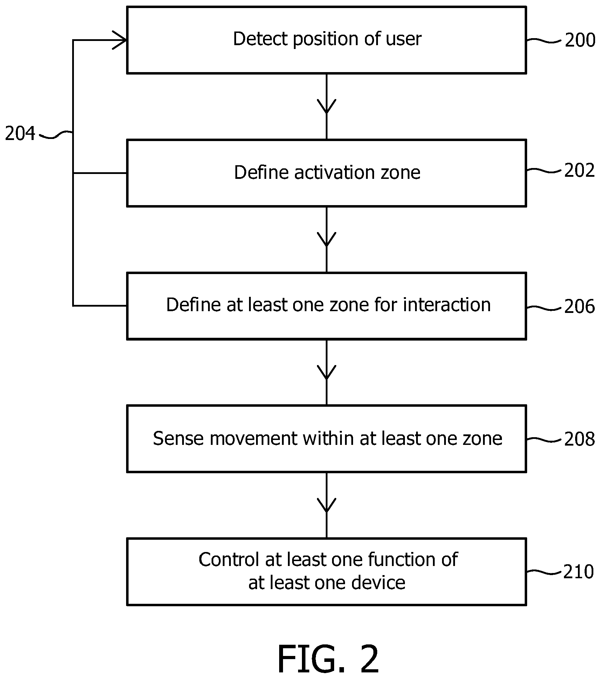

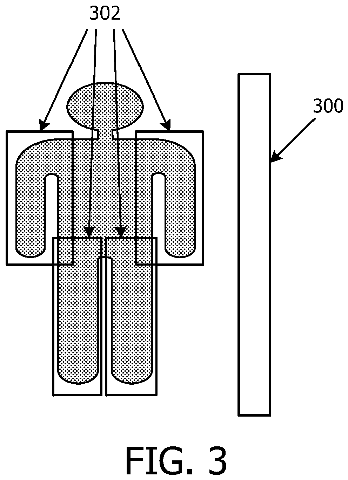

The operation of the system 100 will now be described with reference to the flowchart shown in Figure 2 and Figure 3.

The detector 102 of the system 100 regularly detects the position of a user (step 200). The detector 102 may be a location detector that continuously detects the location of the user. For example, a location detector 102 could detect the presence of the user in a room and also the exact location of the user in the room. The detector 102 may, additionally or alternatively, be a posture detector that regularly detects a body posture of the user, e.g. by detecting the position of the user's torso or head and torso. The posture detector may comprise a plurality of pressure sensors incorporated in a pressure sensitive surface. For example, the pressure sensors may be incorporated in a mattress or pressure sensitive bed sheet on a bed, or in the cushion and arms of a chair. Alternatively, the detector 102 may be in the form of a foil in the bed sheet that the user is lying under, which can detect the shape of a user. By adding pressure sensitive sensors to the sheet, the sheet can detect vertical movement, since the pressure becomes stronger on limbs that are raised underneath the sheet. Alternatively, infrared cameras may be used to detect position of the user. The position of the user is detected and updated regularly, for example, at predetermined time intervals. These intervals can be made shorter so that the update appears like a real-time update. Further, if it is determined that the user is not engaged in interaction, only rough estimation of detected position (posture) are provided, for example, only part of the pressure sensors are active and time intervals are longer in a watching mode.

The processor 104 of the system 100 defines an activation zone 300 on the basis of the position of the user detected by the detector 102 such that the activation zone 300 is located at a distance from the user but within hands reach (step 202). The processor 104 updates the location of the activation zone 300 based on changes in the position of the user detected by the detector 102 by detecting the position of the user and redefining the zones by repeating, 204, steps 200, 202, 206 regularly.

A user activates the system 100 by moving a body limb (for example, a hand) into the activation zone 300 and/or by applying pressure to an object (arm of a chair or area of a mattress) within the activation zone 300. For example, if the detector 102 detects that a person is lying on the centre of a bed then the processor 104 will define an activation zone 300 at a location toward the edge of the bed that is within hands reach of the user. This activation zone 300 may include a zone toward the left edge of the bed and a zone toward the right edge of the bed. When a user wishes to activate the system 100 in order to control devices, the user stretches one of his arms to move it into the activation zone 300. The system 100 is then activated and interaction with the device or devices to be controlled is initiated. Activation of the system 100 may also activate the device or devices to be controlled. Further, the system 100 may be activated to switch the system from its watching mode to an active mode in which updates occur more frequently and more sensors are active than in the watching mode.

The processor 104 defines the location of at least one zone 302 on the basis of the position of the user detected by the detector 102 (step 206). The at least one zones 302 provide areas that a user can interact with in order to control devices. The at least one zone 302 is disengaged when the user is asleep to avoid false activation. Also, when another person is present in the same bed, the at least one zone 302 that is close in connection with this person is disengaged to increase the precision of the other at least one zone 302.

The location and/or size of the at least one zone may be defined based on the position of the user. For example if the user is sitting, the zones may be reduced in size compared to similarly located zones defined when the user is standing or lying down.

The processor 104 updates the location of the at least one zone 302 based on changes in the position of the user detected by the detector 102 (step 204). The user is therefore not limited to any posture, position or location in a bed or chair to operate the system 100, since the system 100 regularly takes into account the position of the user such that the location of the at least one zone 302 is updated before the user interacts with the system 100. The at least one zone 302 is defined in such a way that the user does not need to change his posture, needs a minimal effort to activate a particular function and the probability of false activation is minimized.

In order to interact with system 100 while lying in the bed or sitting on the couch, the user moves his body limbs corresponding to the functionality that the user is intending to manipulate. By displacing particular body limbs (e.g. left hand, right foot, left leg, etc) the user can activate and control the specific functions that have been mapped to this particular movement. The displacement can be done both horizontally (e.g. relative position of the limbs) and vertically (e.g. change of pressure applied by the limbs).

The sensor 108 senses the movement of the user within the at least one zone 302 and inputs the sensed movement of the user into the processor 104 (step 208). The processor 104 processes the sensed movement of the user within the at least one zone 302 and controls at least one function of at least one device (step 210) by a control signal output by the processor 104. For example, to turn the volume down on at least one device when lying in bed, the user can simply move his/her arm downwards on the bed (in the direction of the feet). Similarly, to turn the volume down on at least one device when sitting in a chair, the user can simply move his/her hand along an arm of the chair. The sensor 108 senses this movement of the user within the at least one zone 302, inputs the sensed movement into the processor 104, and the processor 104 processes the sensed movement to control the volume function of at least one device.

The processor 104 may control a rendering device 106. The rendering device 106 may be, for example, a screen for providing visual feedback to a user, or an audio system for providing audio feedback to a user.

In the case of the rendering device 106 being a screen, the screen can provide visual feedback to a user at a position based on the detected body posture of the user. The user is not limited to any posture, position or location in a bed or chair to operate the system 100, since the system 100 takes into account the position of the user when providing feedback to the user. For example, if the detector 102 detects the position (location and body posture) of the user to be lying on his back on a bed in the bedroom, the processor 104 will control the rendering device 106 to provide visual feedback on the ceiling directly above the user's head. Alternatively, if the detector 102 detects the position (location and body posture) of the user to be lying on his back on a bed in the bedroom, the processor 104 will control the rendering device 106 to provide visual feedback on the wall directly in front of the user. Alternatively, if the detector 102 detects the position (location and body posture) of the user to be sat upright in a chair in the living room, the processor 104 will control the rendering device 106 to provide visual feedback on the TV screen. This minimizes the head movement that is required by the user.

Further, the detector 102 detects a particular posture of the user, for example, the user may be slouching on a couch. As a result at least one zone for interaction is maintained and defined on basis of the particular position, i.e. location and posture. If the detector 102 detects that user is then in a more upright position the zones are deactivated and the user uses the remote control device 110.

The system according to the embodiment above can be used in a bedroom or in a relaxation setting (for example, in a couch, chair) when changing body posture (i.e. from sitting to standing) to operate a device and can also be used by immobile patients in a hospital and people with disabilities.

Although embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

'Means', as will be apparent to a person skilled in the art, are meant to include any hardware (such as separate or integrated circuits or electronic elements) or software (such as programs or parts of programs) which reproduce in operation or are designed to reproduce a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. A method for controlling at least one device, the method comprising the steps of:
regularly detecting the position of a user;
defining the location of at least two zones (300, 302) on the basis of the detected position of the user; and
updating the at least two zones (300, 302) based on changes in the detected position of the user, wherein the at least two zones include at least one activation zone (300) for activating or deactivating the device, and which is located at a distance from the user and at least one other zone (302), wherein at least one movement of the user within the at least one other zone (302) controls at least one function of the at least one device other than activating or deactivating the device, wherein the step of regularly detecting the position of a user comprises regularly detecting a body posture of the user, using a posture detector comprising a plurality of pressure sensors incorporated in a pressure sensitive surface incorporated in one of: a mattress, a pressure sensitive bed sheet on a bed, and the cushion and arms of a chair .

2. A method according to claim 1, wherein the step of updating the at least two zones (300, 302) comprises updating the location and/or size of the at least two zones (300, 302).

3. A method according to claim 1, the method further comprising providing visual feedback to the user at a position based on the detected body posture of the user.

4. A method according to claim 1 further comprising
deactivating the at least two zones on the basis of the detected position of the user; and
controlling at least one function of the at least one device by means of a remote control device.

5. A computer program product comprising a plurality of program code portions for carrying out the method according to any one of the preceding claims.

6. A system for controlling at least one device, the system comprising:
a detector (102) for regularly detecting the position of a user;
a processor (104) for defining the location of at least two zones (300, 302) on the basis of the detected position of the user and for updating the at least two zones (300, 302) based on changes in the detected position of the user, wherein the at least two zones include at least one activation zone (300) for activating or deactivating the device, and which is located at a distance from the user and at least one other zone (302),
wherein at least one movement of the user within the at least one other zone (302) controls at least one function of the at least one device other than activating or deactivating the device, wherein the detector (102) is a posture detector for detecting a body posture of the user, wherein the posture detector comprises a plurality of pressure sensors incorporated in a pressure sensitive surface incorporated in one of: a mattress, a pressure sensitive bed sheet on a bed, and the cushion and arms of a chair.

7. A system according to claim 6, further comprising a rendering device (106) for providing visual feedback to the user at a position based on the detected body posture of the user.

8. A system according to claim 6, further comprising at least one sensor (108) for sensing the at least one movement or presence of the user within the other zone (300, 302).

9. A system according to claim 6, further comprising a remote control device (110) for controlling at least one function of the at least one device when the other zone is deactivated on the basis of the detected position of the user.

## Patentansprüche

1. Verfahren zum Steuern mindestens einer Vorrichtung, wobei das Verfahren die folgenden Schritte umfasst:
regelmäßiges Erfassen der Position eines Benutzers;
Definieren der Lage von mindestens zwei Zonen (300, 302) auf der Basis der erfassten Positionen des Benutzers; und
Aktualisieren der mindestens zwei Zonen (300, 302) basierend auf Änderungen der erfassten Position des Benutzers, wobei die mindestens zwei Zonen mindestens eine Aktivierungszone (300) zum Aktivieren oder Deaktivieren der Vorrichtung aufweisen, und die in einem Abstand von dem Benutzer und der mindestens einen anderen Zone (302) liegt, wobei mindestens eine Bewegung des Benutzers innerhalb der mindestens einen anderen Zone (302) mindestens eine Funktion der mindestens einen anderen Vorrichtung als die aktivierende oder deaktivierende Vorrichtung steuert, wobei der Schritt des regelmäßigen Erfassens der Position eines Benutzers das regelmäßige Erfassen einer Körperhaltung des Benutzers, das Verwenden eines Haltungsdetektors, der eine Vielzahl von Drucksensoren umfasst, die in eine druckempfindliche Oberfläche eingebaut sind, die eingebaut sind in einem von: einer Matratze oder einem druckempfindlichen Bettlaken auf einem Bett oder dem Kissen und den Armen eines Stuhls.

2. Verfahren nach Anspruch 1, wobei der Schritt des Aktualisierens der mindestens zwei Zonen (300, 302) das Aktualisieren der Lage und/oder der Größe der mindestens zwei Zonen (300, 302) umfasst.

3. Verfahren nach Anspruch 1, wobei das Verfahren weiter das Bereitstellen visuellen Feedbacks zu dem Benutzer an einer Position basierend auf der erfassten Körperhaltung des Benutzers umfasst.

4. Verfahren nach Anspruch 1, weiter umfassend
das Deaktivieren der mindestens zwei Zonen auf der Basis der erfassten Position des Benutzers; und
das Steuern mindestens einer Funktion der mindestens einen Vorrichtung mittels einer Fernbedienungsvorrichtung.

5. Computerprogrammprodukt, das eine Vielzahl von Programmcodeabschnitten zum Ausführen des Verfahrens nach einem beliebigen der vorstehenden Ansprüche umfasst.

6. System zum Steuern mindestens einer Vorrichtung, wobei das System umfasst:
einen Detektor (102) zum regelmäßigen Erfassen der Position eines Benutzers;
einen Prozessor (104) zum Definieren der Lage von mindestens zwei Zonen (300, 302) auf der Basis der erfassten Position des Benutzers und zum Aktualisieren der mindestens zwei Zonen (300, 302) basierend auf Änderungen der erfassten Position des Benutzers, wobei die mindestens zwei Zonen mindestens eine Aktivierungszone (300) zum Aktivieren oder Deaktivieren der Vorrichtung aufweisen, und die in einem Abstand von dem Benutzer und der mindestens einer anderen Zone (302) liegt,
wobei mindestens eine Bewegung des Benutzers innerhalb der mindestens einen anderen Zone (302) mindestens eine Funktion der mindestens einen anderen Vorrichtung als Aktivieren oder Deaktivieren der Vorrichtung steuert,
wobei der Detektor (102) ein Haltungsdetektor zum Erfassen einer Körperhaltung des Benutzers ist, wobei der Haltungsdetektor eine Vielzahl von Drucksensoren umfasst, die in eine druckempfindliche Oberfläche eingebaut sind, die eingebaut ist in einem von: einer Matratze oder einem druckempfindlichen Bettlaken auf einem Bett und dem Kissen und den Armen eines Stuhls.

7. System nach Anspruch 6, das weiter eine Renderingvorrichtung (106) zum Bereitstellen visuellen Feedbacks zu dem Benutzer an einer Position basierend auf der erfassten Körperhaltung des Benutzers umfasst.

8. System nach Anspruch 6, das weiter mindestens einen Sensor (108) zum Abtasten der mindestens einen Bewegung oder Gegenwart des Benutzers innerhalb der anderen Zone (300, 302) umfasst.

9. System nach Anspruch 6, das weiter eine Fernbedienungsvorrichtung (110) zum Steuern mindestens einer Funktion der mindestens einen Vorrichtung umfasst, wenn die andere Zone auf der Basis der erfassten Position des Benutzers deaktiviert ist.

## Revendications

1. Procédé de commande d'au moins un dispositif, le procédé comprenant les étapes de :
détection régulière de la position d'un utilisateur ;
définition de l'emplacement d'au moins deux zones (300, 302) sur la base de la position détectée de l'utilisateur ; et
mise à jour des au moins deux zones (300, 302) d'après des changements de la position détectée de l'utilisateur, dans lequel les au moins deux zones incluent au moins une zone d'activation (300) pour activer ou désactiver le dispositif, et qui est située à une distance de l'utilisateur et au moins une autre zone (302), dans lequel au moins un mouvement de l'utilisateur au sein de l'au moins une autre zone (302) commande au moins une fonction de l'au moins un dispositif autre que l'activation ou la désactivation du dispositif, dans lequel
l'étape de détection régulière de la position d'un utilisateur comprend la détection régulière d'une posture du corps de l'utilisateur, à l'aide d'un détecteur de posture comprenant une pluralité de capteurs de pression incorporés dans une surface sensible à la pression incorporée dans l'un parmi : un matelas, un drap sensible à la pression sur un lit, et le coussin et les accoudoirs d'un fauteuil.

2. Procédé selon la revendication 1, dans lequel l'étape de mise à jour des au moins deux zones (300, 302) comprend la mise à jour de l'emplacement et/ou de la taille des au moins deux zones (300, 302).

3. Procédé selon la revendication 1, le procédé comprenant en outre la fourniture d'un retour visuel à l'utilisateur en une position d'après la posture du corps détectée de l'utilisateur.

4. Procédé selon la revendication 1, comprenant en outre
la désactivation des au moins deux zones sur la base de la position détectée de l'utilisateur ; et
la commande d'au moins une fonction de l'au moins un dispositif au moyen d'un dispositif de télécommande.

5. Produit programme d'ordinateur comprenant une pluralité de portions de code de programme pour réaliser le procédé selon l'une quelconque des revendications précédentes.

6. Système de commande d'au moins un dispositif, le système comprenant :
un détecteur (102) pour détecter régulièrement la position d'un utilisateur ;
un processeur (104) pour définir l'emplacement d'au moins deux zones (300, 302) sur la base de la position détectée de l'utilisateur et pour mettre à jour les au moins deux zones (300, 302) d'après des changements de la position détectée de l'utilisateur, dans lequel les au moins deux zones incluent au moins une zone d'activation (300) pour activer ou désactiver le dispositif, et qui est située à une distance de l'utilisateur et au moins une autre zone (302),
dans lequel au moins un mouvement de l'utilisateur au sein de l'au moins une autre zone (302) commande au moins une fonction de l'au moins un dispositif autre que l'activation ou la désactivation du dispositif,
dans lequel le détecteur (102) est un détecteur de posture pour détecter une posture du corps de l'utilisateur, dans lequel le détecteur de posture comprend une pluralité de capteurs de pression incorporés dans une surface sensible à la pression incorporée dans l'un parmi : un matelas, un drap sensible à la pression sur un lit, et le coussin et les accoudoirs d'un fauteuil.

7. Système selon la revendication 6, comprenant en outre un dispositif de rendu (106) pour fournir un retour visuel à l'utilisateur en une position d'après la posture du corps détectée de l'utilisateur.

8. Système selon la revendication 6, comprenant en outre au moins un capteur (108) pour détecter l'au moins un mouvement ou présence de l'utilisateur au sein de l'autre zone (300, 302).

9. Système selon la revendication 6, comprenant en outre un dispositif de télécommande (110) pour commander au moins une fonction de l'au moins un dispositif lorsque l'autre zone est désactivée sur la base de la position détectée de l'utilisateur.
